# EUROPÄISCHE PATENTSCHRIFT

(11) **EP 1 527 123 B1**
(45) Veröffentlichungstag und Bekanntmachung des Hinweises auf die Patenterteilung: **29.06.2011**
(21) Anmeldenummer: 03766306.9
(22) Anmeldetag: 25.07.2003
(51) Int. Cl.: C08J 7/02, C08J 7/06, C08J 7/12, C08J 7/14, C08J 7/16, C08L 79/06, C08G 73/08, C08G 73/18, C08G 73/22

(54) **VERFAHREN ZUR BEHANDLUNG VON POLYAZOLFOLIEN**
METHOD FOR THE TREATMENT OF POLYAZOLE FILMS
PROCEDE DE TRAITEMENT DE PELLICULES POLYAZOL

(30) Priorität: 27.07.2002 DE 10234236
(43) Veröffentlichungstag der Anmeldung: 04.05.2005
(73) Patentinhaber: BASF Fuel Cell Research GmbH, 67056 Ludwigshafen (DE)
(72) Erfinder: PETERSEN, Joachim, 36039 Fulda (DE)
(74) Vertreter: Luderschmidt, Schüler & Partner
(86) Internationale Anmeldenummer: PCT/EP2003/008250
(87) Internationale Veröffentlichungsnummer: WO 2004/013211

(56) Entgegenhaltungen:
- US-A- 2 413 559
- US-A- 4 927 909

## Beschreibung

Die vorliegende Erfindung betrifft Verfahren zur Behandlung von Polyazolfolien mit Flüssigkeiten.

Mit Säure dotierte Polymermembranen können aufgrund ihrer hervorragenden chemischen, thermischen und mechanischen Eigenschaften vielfältig eingesetzt werden und eignet sich insbesondere als Polymer-Elektrolyt-Membran (PEM) in sogenannten PEM-Brennstoffzellen.

Die basischen Polyazol-Membranen werden mit konzentrierter Phosphorsäure oder Schwefelsäure dotiert und wirken als Protonenleiter und Separatoren in sogenannten Polymerelektrolyt-Membran-Brennstoffzellen (PEM-Brennstoffzellen).

Bedingt durch die hervorragenden Eigenschaften des Polyazol-Polymeren können derartige Polymerelektrolytmembran - zu Membran-Elektroden-Einheit (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Durch die Dotierung mit Säuren verändern sich die mechanischen Eigenschaften der Folie beträchtlich. So nimmt beispielsweise das E-Modul auf 10 % des Ausgangswertes ab, so daß eine Polyazolfolie nach einer Dotierung nur eine relativ geringe mechanische Stabilität aufweist. Darüber hinaus nimmt Fläche der Folie durch das Dotieren um bis zu 50% zu.

Aufgrund dieser problematischen Eigenschaften wurden diese Folien in einem rein manuellen Verfahren mit Säure dotiert, indem man die Folien in ein Wasser- oder Säurebad legt und anschließend das Flüssigkeitsbad mehrmals wechselt.

Problematisch an diesem Verfahren ist unter anderem der hohe Verbrauch an Flüssigkeit. Des weiteren sind Verfahren gemäß dem Stand der Technik wenig flexibel und sehr arbeitsintensiv. Hierbei ist zu beachten, daß Polyazolfolien zunächst eine sehr geringe Flexibilität zeigen, die aber durch die Behandlung mit Säuren unter Verlust an mechanischer Stabilität stark zunimmt.

Des weiteren weisen derartige Folien, die im allgemeinen aus organischen Lösungsmitteln gegossen werden, hohe Anteile an Lösemittelresten auf, die die Gesundheit gefährden können. Bisher wurden diese Lösungsmittel, beispielsweise Dimethylacetamid (DMAc) durch Trocknen entfernt.

Eine Aufgabe der vorliegenden Erfindung besteht daher darin, Verfahren zur Verfügung zu stellen, die die zuvor genannten Probleme lösen. Durch das Verfahren sollte eine einfache, sichere und zuverlässige Behandlung von Polyazolfolien geschaffen werden.

Des weiteren liegt der vorliegenden Erfindung die Aufgabe zugrunde ein Verfahren zur Verfügung zu stellen, das sehr flexibel auf das sich während der Behandlung in großem Maß verändernde mechanische Verhalten der Folie angepaßt werden kann, ohne daß hierdurch ein hoher Arbeitsaufwand entsteht.

Darüber hinaus soll das Verfahren einen besonders geringen Flüssigkeitsverbrauch aufweisen. Außerdem sollte das Verfahren kostengünstig sein.

Des weiteren war es mithin Aufgabe der vorliegenden Erfindung Verfahren zur Verfügung zu stellen, die ein Entfernen von gefährlichen Lösungsmitteln ermöglichen. Insbesondere sollte das Verfahren sowohl ein Entfernen von Lösungsmitteln als auch ein Dotieren von Polyazolfolien erlauben, ohne daß verschiedene Anlagen benötigt werden.

Des weiteren sollte durch das Verfahren die mechanische Stabilität von Polyazolfolien verbessern. Diese Eigenschaften umfassen insbesondere den E-Modul, die Reißfestigkeit und die Bruchzähigkeit der Folie.

Gelöst werden diese Aufgaben durch ein Verfahren zum Behandeln von Polyazolfolien, bei dem man eine Folie mindestens zweimal durch eine mit Flüssigkeit gefüllte Wanne führt, wobei man die Folie von einer Spule abspult und auf eine weitere Spule aufspult und die Laufrichtung der Folie während der Behandlung durch Ändern der Drehrichtung der Spulen wechselt.

Im Bereich von Textilien ist dieses Vorgehen z.B. beim Färben bekannt. Im Gegensatz zu Geweben ist eine Folie jedoch nicht in der Lage innerhalb kurzer Zeit größere Flüssigkeitsmengen aufzunehmen. Des weiteren behalten textile Gewebe im wesentlichen ihre mechanischen Eigenschaften und verändern ihre Dimension während der Behandlung nur gering.

Dementsprechend ist die erfindungsgemäße Lösung insbesondere deshalb überraschend, weil das Verfahren sich an die ändernden Eigenschaften der Folie anpaßt. Darüber hinaus kommt die Folie nur eine sehr kurze Zeit in Berührung mit der sich in der Wanne befindlichen Flüssigkeit, ohne daß dies eine Behandlung nachteilig beeinflußt. Überraschend muß daher davon ausgegangen werden, daß die Behandlung der Folie auch im aufgespulten Zustand durch Flüssigkeit stattfindet, die zusammen mit der Folie aufgewickelt wird.

Erfindungsgemäß werden Folien behandelt, die Polyazole umfassen. Vor einer Behandlung mit Säure enthalten diese Folien im allgemeinen mindestens 50 Gew.-%, vorzugsweise 70 Gew.-% Polyazole, ohne daß hierdurch eine Beschränkung erfolgen soll. Derartige Polymere sind an sich bekannt.

Polyazole enthalten wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII) 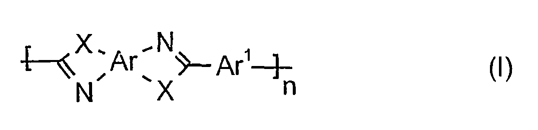 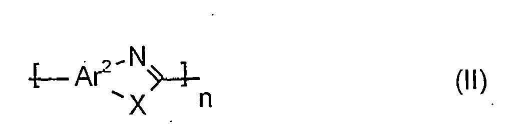 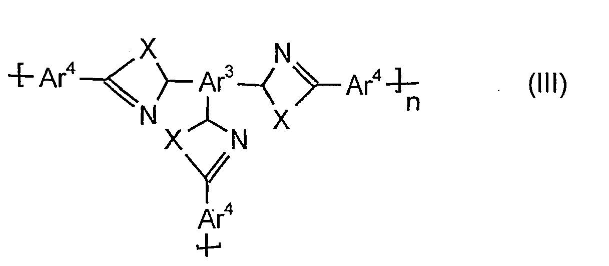 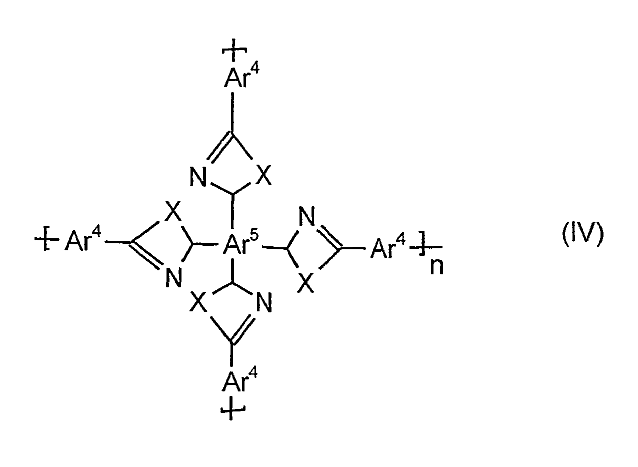 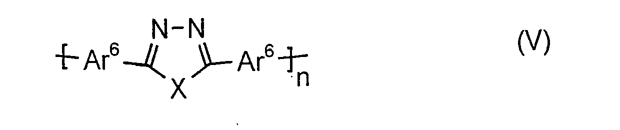 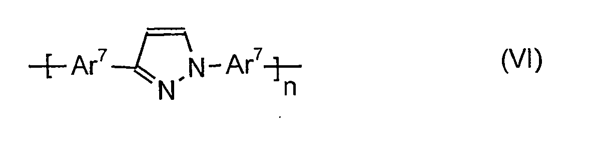 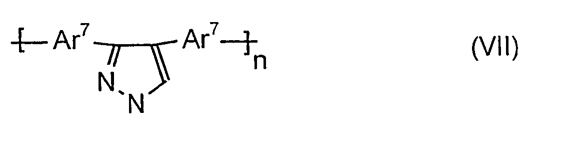 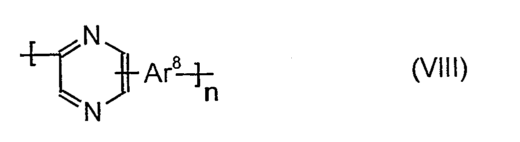 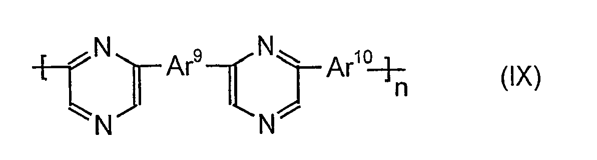 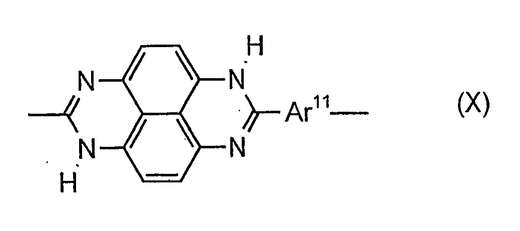 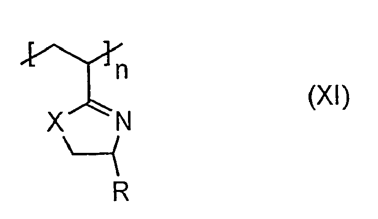 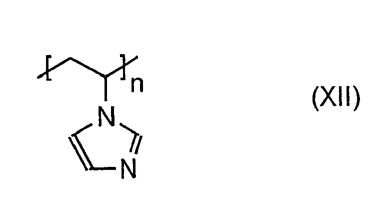 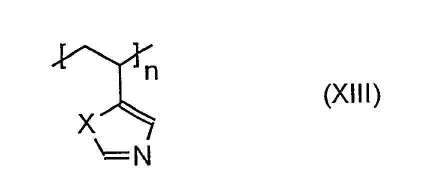 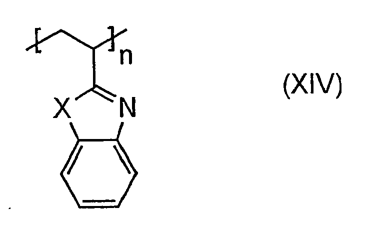 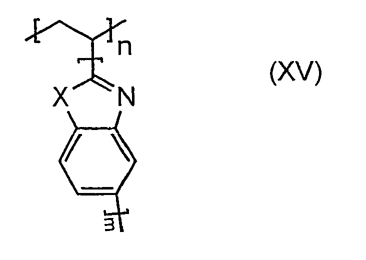 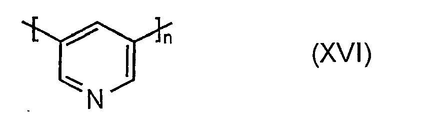 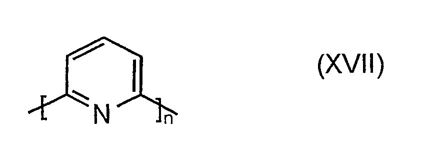 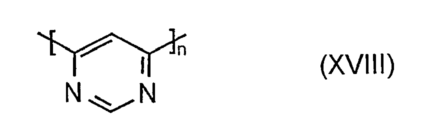 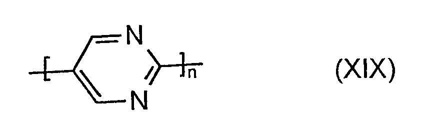 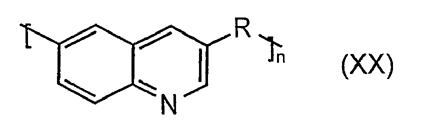 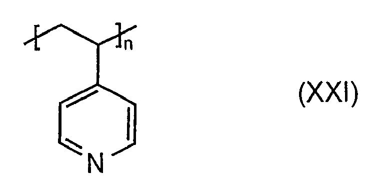 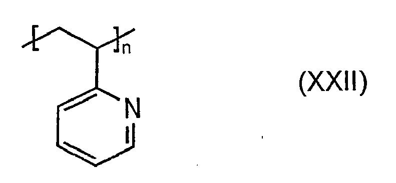 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht und
- n, m: eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 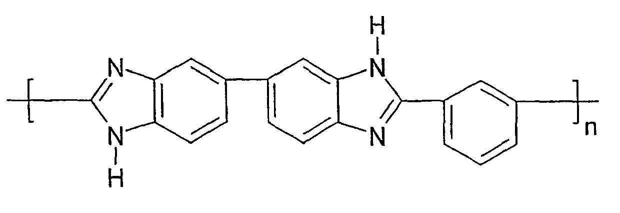 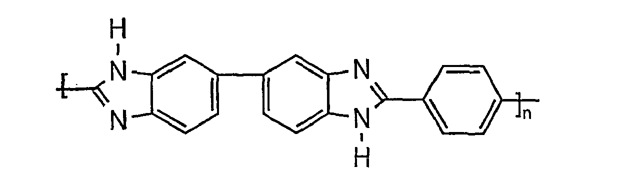 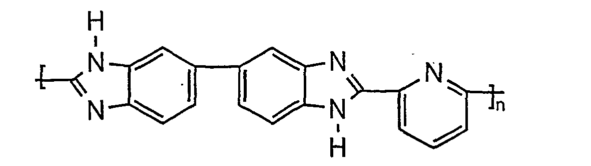 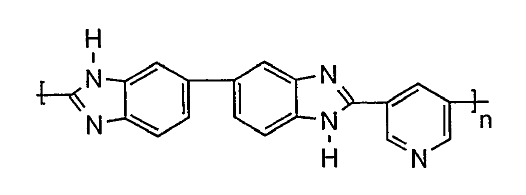 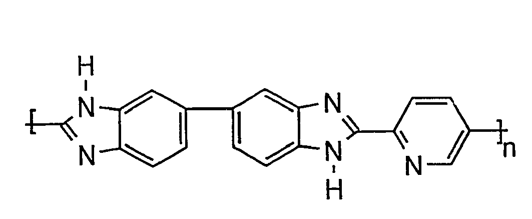 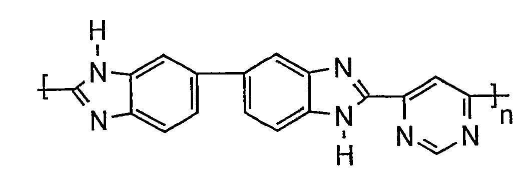 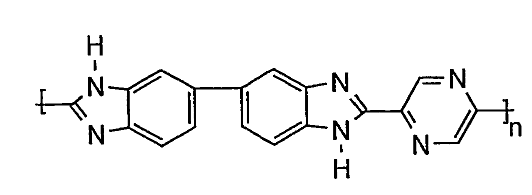 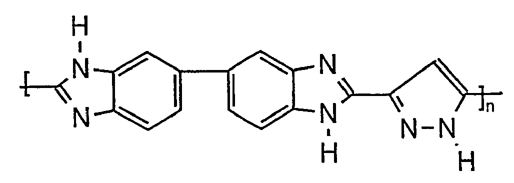 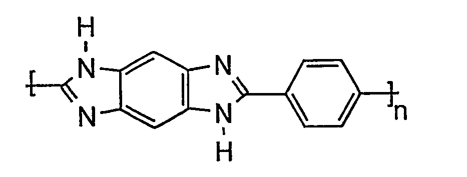 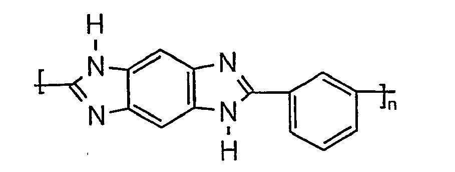 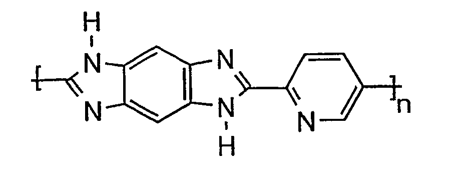 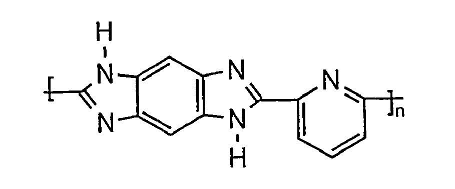 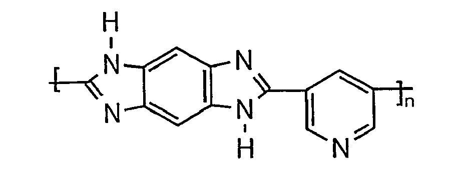 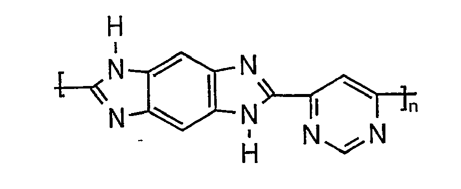 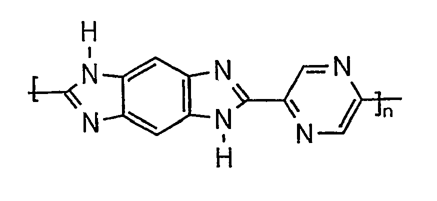 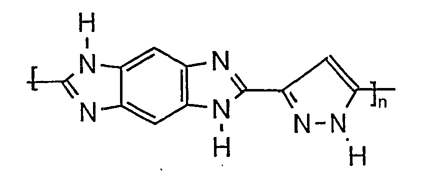 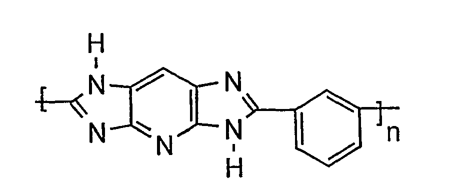 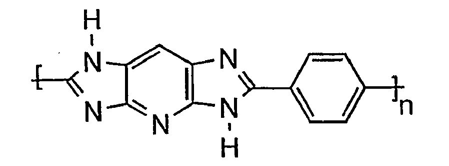 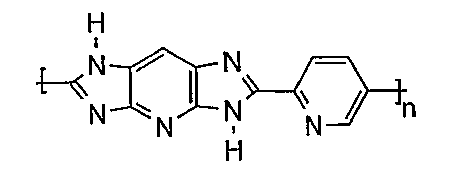 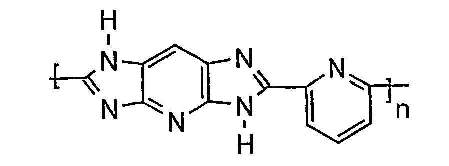 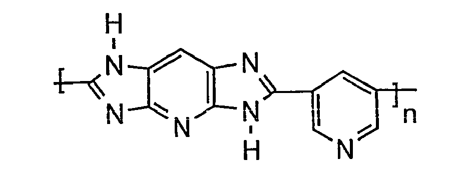 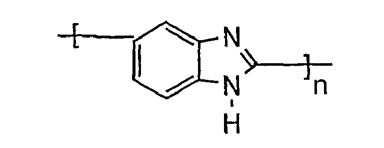 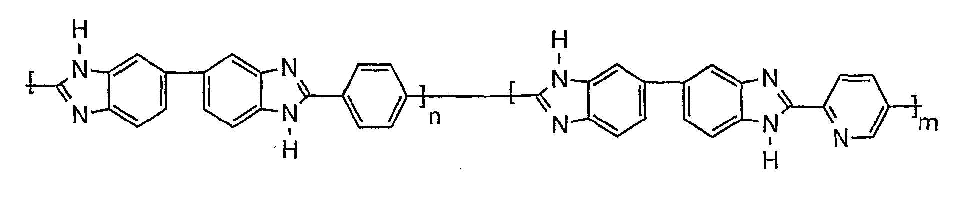 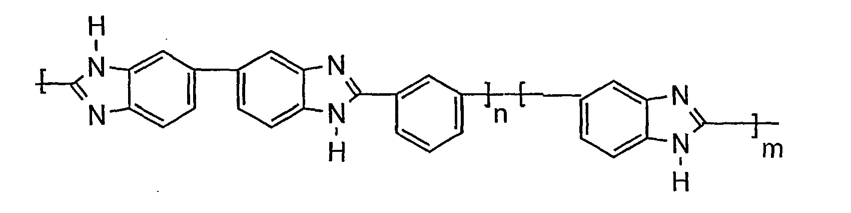 wobei n und m eine ganze Zahl größer gleich 10, vorzugsweise größer gleich 100 ist.

Bevorzugte Polyazole, insbesondere jedoch die Polybenzimidazole zeichnen sich durch ein hohes Molekulargewicht aus. Gemessen als Intrinsische Viskosität beträgt diese mindestens 1,0 dl/g, vorzugsweise mindestens 1,2 dl/g.

Die Herstellung derartiger Polyazole ist bekannt, wobei ein oder mehrere aromatische Tetra-Amino-Verbindungen mit ein oder mehreren aromatischen Carbonsäuren bzw. deren Estern, die mindestens zwei Säuregruppen pro Carbonsäure-Monomer enthalten, in der Schmelze zu einem Präpolymer umgesetzt werden. Das entstehende Präpolymer erstarrt im Reaktor und wird anschließend mechanisch zerkleinert. Das pulverförmige Präpolymer wird üblich in einer Festphasen-Polymerisation bei Temperaturen von bis zu 400°C endpolymerisiert. Bevorzugte Polybenzimidazole sind unter dem Handelsnamen ®Celazole von Celanese AG kommerziell erhältlich.

Zur Herstellung von Polymerfolien wird das Polyazol in einem weiteren Schritt in polaren, aprotischen Lösemitteln wie beispielsweise Dimethylacetamid (DMAc) gelöst und eine Folie mittels klassischer Verfahren erzeugt.

Zur Entfernung von Lösemittelresten kann die so erhaltene Folie mittels des erfindungsgemäßen Verfahrens mit einer Waschflüssigkeit behandelt werden. Vorzugsweise ist diese Waschflüssigkeit ausgewählt aus der Gruppe der Alkohole, Ketone, Alkane (aliphatische und cycloaliphatische), Ether (aliphatische und cycloaliphatische), Ester, Carbonsäuren, wobei die vorstehenden Gruppenmitglieder halogeniert sein können, Wasser, anorganischen Säuren (wie z.B. H3P04, H2S04) und Gemische derselben eingesetzt.

Insbesondere werden C1-C10 Alkohole, C2-C5 Ketone, C1-C10-Alkane (aliphatische und cycloaliphatische), C2-C6-Ether (aliphatische und cycloaliphatische), C2-C5 Ester, C1-C3 Carbonsäuren, Dichlormethan, Wasser, anorganischen Säuren (wie z.B. H3P04, H2S04) und Gemische derselben eingesetzt. Von diesen Flüssigkeiten ist Wasser besonders bevorzugt.

Nach dem Waschen kann die Folie getrocknet werden, um die Waschflüssigkeit zu entfernen. Die Trocknung erfolgt in Abhängigkeit vom Partial-Dampfdruck der gewählten Behandlungs-Flüssigkeit. Üblicherweise erfolgt die Trocknung bei Normaldruck und Temperaturen zwischen 20°C und 200°C. Eine schonendere Trocknung kann auch im Vakuum erfolgen. Anstelle der Trocknung kann in die Membran auch abgetupft und somit von überschüssiger Behandlungsflüssigkeit befreit werden. Die Reihenfolge ist unkritisch.

Durch die zuvor beschriebene Reinigung der Polyazolfolie von Lösungsmittelresten verbessern sich überraschend die mechanischen Eigenschaften der Folie. Diese Eigenschaften umfassen insbesondere den E-Modul, die Reißfestigkeit und die Bruchzähigkeit der Folie.

Um eine Protonen-Leitfähigkeit zu erzielen, werden diese Folien mit einer Säure dotiert. Auch hierfür ist das vorliegende Verfahren besonders geeignet. Säuren umfassen in diesem Zusammenhang alle bekannten Lewis- und Bronsted-Säuren, vorzugsweise anorganische Lewis- und Brønsted-Säuren.

Weiterhin ist auch der Einsatz von Polysäuren möglich, insbesondere Isopolysäuren und Heteropolysäuren sowie von Mischungen verschiedener Säuren. Dabei bezeichnen im Sinne der vorliegenden Erfindung Heteropolysäuren anorganische Polysäuren mit mindestens zwei verschiedenen Zentralatomen, die aus jeweils schwachen, mehrbasischen Sauerstoff-Säuren eines Metalls (vorzugsweise Cr, Mo, V, W) und eines Nichtmetalls (vorzugsweise As, I, P, Se, Si, Te) als partielle gemischte Anhydride entstehen. Zu ihnen gehören unter anderen die 12-Molybdatophosphorsäure und die 12-Wolframatophosphorsäure.

Über den Dotierungsgrad kann die Leitfähigkeit des erfindungsgemäßen Polymers beeinflusst werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 15, insbesondere zwischen 6 und 12, bevorzugt.

Erfindungsgemäß besonders bevorzugte Dotierungsmittel sind Schwefelsäure und Phosphorsäure. Ein ganz besonders bevorzugtes Dotierungsmittel ist Phosphorsäure (H₃PO₄). Hierbei werden im allgemeinen hochkonzentrierte Säuren eingesetzt. Gemäß einem besonderen Aspekt der vorliegenden Erfindung beträgt die Konzentration der Phosphorsäure mindestens 50% Gew.-%, insbesondere mindestens 80 Gew.-%, bezogen auf das Gewicht des Dotierungsmittels.

Weiterhin ist es möglich Teile oder die gesamte Säure durch vinylphosphonsäurehaltige und/oder vinylsulfonsäurehaltige Monomere zu ersetzen und somit eine Quellung der Folie zu bewerkstelligen. Anschließend wird die gequollene Folie wie in der deutschen Patentanmeldung 10210499.2 oder 10209419.5 beschrieben polymerisiert.

Die Folie wird mindestens zweimal, vorzugsweise mindestens 10mal und besonders bevorzugt mindestens 25mal durch ein Flüssigkeitsbad geführt, wobei man die Laufrichtung der Folie durch Ändern der Drehrichtung der Spulen wechselt.

Die Geschwindigkeit mit der die Folie durch die Flüssigkeit geführt wird, richtet sich nach Art der Flüssigkeit und der Folie. Im allgemeinen wird die Folie mit einer Geschwindigkeit von 0,5 bis 100 m/min, insbesondere 1,0 bis 25 m/min durch das Flüssigkeitsbad gezogen.

Bevorzugt beträgt der Tauchweg der Folie in der Flüssigkeit 0,05 bis 10 m, insbesondere 0,15 m bis 2 m.

Gemäß einer besonderen Ausführungsform des vorliegenden Verfahrens liegt die Behandlungszeit im Bereich von 2 Minuten bis 10 Stunden, vorzugsweise im Bereich von 15 Minuten bis 3 Stunden.

Die Geschwindigkeit, mit der die Folie durch das Flüssigkeitsbad geführt wird, kann auf an sich bekannte Weise gesteuert werden. Hierzu gehören unter anderem eine Steuerung der Rotationsgeschwindigkeit der Spulen über eine Tachowalze oder über die Messung ihrer Drehzahl.

Gemäß einer besonderen Ausführungsform der vorliegenden Erfindung wird über die Rückzugskraft eine besonders gleichmäßige, glatte und faltenfreie Aufwicklung der Folie erzielt. Bevorzugt wird die Folie mit einer Rückzugskraft bezogen auf Breite der Folie im Bereich von 0,5 bis 200 N/m, vorzugsweise von 1 bis 150 N/m und besonders bevorzugt im Bereich von 12 bis 60 N/m durch die mit Flüssigkeit gefüllte Wanne geführt. Die Breite bezieht sich hierbei auf die Längenausdehnung der Folie senkrecht zur Laufrichtung vor der Behandlung mit Flüssigkeit. Bezogen auf Folie mit einer Breite im Bereich von 20 cm bis 200 cm ergeben sich hieraus bevorzugte Rückzugskräfte im Bereich von 0,1 bis 400 N, insbesondere 0,2 bis 300 N und besonders bevorzugt 2,4 bis 120 N, ohne daß hierdurch eine Beschränkung erfolgen soll.

Gemäß einem besonderen Aspekt der vorliegenden Erfindung haftet an der Folie nach der ersten Behandlung Flüssigkeit, wobei bevorzugt mindestens 1 g/m², insbesondere mindestens 10 g/m² Flüssigkeit nach der ersten Behandlung an der Folie verbleiben. Dieser Wert bezieht sich auf die Gewichtszunahme durch die Behandlung mit Flüssigkeit.

Bei der Behandlung der Folie mit einer Waschflüssigkeit, beispielsweise Wasser haften vorzugsweise 1 bis 1000 ml/m², insbesondere 5 bis 250 ml/m², besonders bevorzugt 15 bis 150 ml/m² und ganz besonders bevorzugt 25 bis 75 ml/m² an der Folie, ohne daß hierdurch eine Beschränkung erfolgen soll. Wird die Folie mit einer Säure, beispielsweise Phosphorsäure dotiert, so haften vorzugsweise 1 bis 1000 ml/m², insbesondere 10 bis 800 ml/m², besonders bevorzugt 50 bis 600 ml/m²und ganz besonders bevorzugt 100 bis 400 ml/m² an der Folie Die Menge an Flüssigkeit, die nach einer Behandlung im Flüssigkeitsbad auf der Folie haftet und in diese eindringt, kann über die Geschwindigkeit gesteuert werden, mit der die Folie durch das Flüssigkeitsbad geführt wird.

Des weiteren ist die Flüssigkeitsmenge von der Temperatur abhängig bei der die Behandlung erfolgt. Die Temperatur bei der das vorliegende Verfahren durchgeführt wird ist nicht kritisch und kann daher in weiten Bereichen schwanken. Im allgemeinen wird das vorliegende Verfahren jedoch im Bereich von 0 bis 150°C, vorzugsweise 10 °C bis 100°C durchgeführt, wobei die Bereiche von den physikalischen Eigenschaften der Flüssigkeit abhängen.

Nach einer besonderen Ausführungsform kann die sich in der Wanne befindliche Flüssigkeit je nach Bedarf erneuert oder durch eine andere Flüssigkeit ausgetauscht werden. Hierdurch kann beispielsweise eine verschmutzte durch eine frische Flüssigkeit der gleichen Art ersetzt werden. Des weiteren kann die Flüssigkeit durch eine andere ausgetauscht werden. Durch diese Maßnahme kann eine Folie sowohl gewaschen als auch dotiert werden, ohne daß eine andere Vorrichtung eingesetzt werden muß. Dieser Vorgang kann chargenweise oder kontinuierlich erfolgen, wobei auch einzelne Komponenten zu dosiert werden können.

Zur Durchführung des vorliegenden Verfahrens eignen sich insbesondere Jigger, die beispielsweise in Dietmar Fries, Ausbildungsmittel, Unterrichtshilfen "Textilveredelung, Beschichten", Arbeitgeberkreis Gesamttextil AGK (1992) S. 2.13 beschrieben sind. Diese Vorrichtungen können unter anderem von den Firmen Mathis AG und Kuester AG kommerziell erhalten werden.

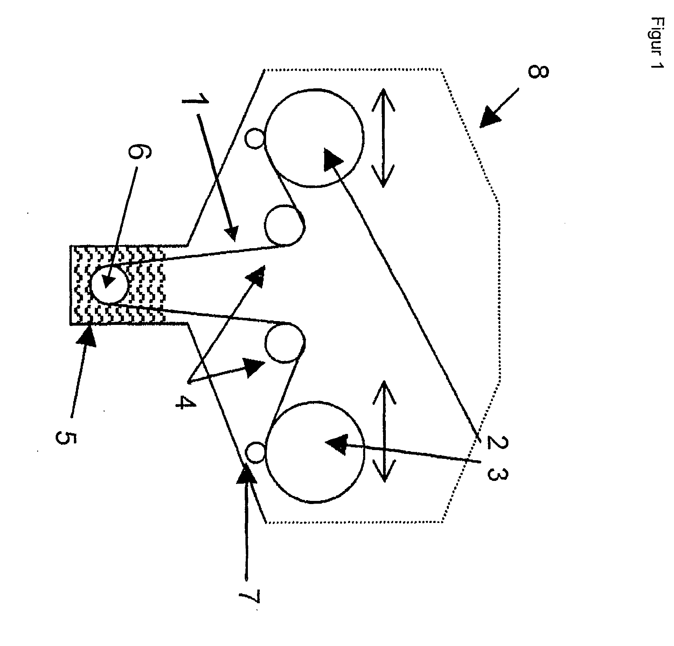

Nachfolgend wird die vorliegende Erfindung unter Verwendung eines in Abbildung 1 schematisch gezeigten Jiggers dargestellt, ohne daß diese Beschreibung die Erfindung begrenzen soll.

Eine Polyazolfolie (1) wird von einer Spule (2) abgewickelt und auf eine zweite Spule (3) aufgewickelt und dabei z.B. über eine Walze (4) geführt. Die Folie wird durch eine Wanne (5) geleitet und dort über eine Walze (6) umgelenkt. In der Wanne wird die Folie mit Flüssigkeit behandelt. Nach dem Verlassen der Wanne gefolgt von einer weiteren Umlenkung kann überschüssige Flüssigkeit gegebenenfalls vor dem Aufwickeln durch Druck, der über eine weitere Walze (7) erzeugt wird, entfernt werden. Auf den Polyazolfolien haftet im allgemeinen Flüssigkeit, so daß diese Flüssigkeit auch im aufgewickelten Zustand auf die Folie einwirkt.

Alle Teile des Jigger, die mit der Flüssigkeit in Berührung kommen, können rostfrei ausgestattet sein. Dies ist insbesondere für die Dotierung der Folie mit konzentrierten Säuren von Vorteil. Dementsprechend können die Walzen und Spulen beispielsweise aus rostfreiem Edelstahl sein.

Die Geschwindigkeit und/oder die Rückzugskraft der Folie kann beispielsweise über die Walzen (4) und/oder (6) ermittelt werden, die dann als Tacho- oder Tensiometerwalze ausgeführt ist. Darüber hinaus kann das Gerät mit einer elektronischen Steuerung versehen werden, die die Geschwindigkeit und die Laufrichtung der Walzen regelt. So kann vorgesehen sein, daß das Gerät automatisch die Laufrichtung wechselt, nachdem die gesamte Folie (1) von einer Spule (2) auf die zweite Spule (3) übertragen wurde.

Des weiteren können Mittel zur Temperierung des Jiggers, insbesondere der Wanne (5) vorgesehen sein, wobei die in die aufgerollte Folie eingetragene Wärmeenergie, insbesondere auch von der Rotationsgeschwindigkeit der Spulen (2) und (3) abhängt.

Des weiteren kann der Jigger eine Abdeckung (8) umfassen, die die Wanne und die Spulen gegenüber der Umgebung abschließt. Hierdurch kann ein Verflüchtigen der Flüssigkeit verhindert werden. Des weiteren können hygroskopische Flüssigkeiten, wie beispielsweise konzentrierte Phosphorsäure vor Feuchtigkeit geschützt werden, wobei der Jigger mit trockener Luft oder mit Stickstoff gespült werden kann.

Nachfolgend wird die Erfindung durch Beispiele und Vergleichsbeispiel eingehender erläutert, ohne daß die Erfindung auf diese Beispiele beschränkt werden soll.

### Beispiel 1

Ein Jigger vom Typ WJ 650 der Fa. Mathis AG wurde mit ca. 20 m PBI-Folie, die eine Breite von 42 cm aufwies, beschickt, die etwa 25 Gew.-% DMAc enthielt. Die Wanne des Jiggers wurde mit 3 I Wasser gefüllt. Das Wasser des Jiggers wurde auf 80°C erhitzt. Die Folie wurde dreißig mal mit dem Wasser behandelt. Hierbei wurde der Jigger mit 3,0 m/min bei einer Rückzugskraft von 10 N betrieben, wobei die Folie jeweils ca. 5 s getaucht wurde (Tauchweg ca. 25cm).

Aus dem Film wird der Restlösemittelgehalt mit Karl Fischer (KF)-Titration bestimmt. Mittels einer Mettler-Toledo Apparatur wird per KF-Titration der Wassergehalt in der Folie wie folgt direkt bestimmt. Die Probe, die sich in einem geschlossenen Probengläschen befindet wird auf 250°C aufgeheizt und bei dieser Temperatur getrocknet. Das so freigesetzte Gas wird direkt in ein geschlossenes Titrationsgefäss geleitet und mit Karl-Fischer [KF] Reagens analysiert. Neben der Bestimmung des Wassergehaltes wird durch gravimetrische Bestimmung des Gewichtes vor und nach dem Trocknen der Restlösemittelgehalt bestimmt. Nach der Behandlung betrug der DMAc-Gehalt 0,0%.

### Vergleichsbeispiel 1

Die in Beispiel 1 verwendete PBI-Folie wurde bei 40°C auf herkömmliche Weise getrocknet.

Nach der Behandlung betrug der gemäß KF gemessene DMAc-Gehalt 2%.

## Patentansprüche

1. Verfahren zum Behandeln von Polyazolfolien, **dadurch gekennzeichnet, daß** man eine Folie mindestens zweimal durch eine mit Flüssigkeit gefüllte Wanne führt, wobei man die Folie von einer Spule abspult und auf eine weitere Spule aufspult und die Laufrichtung der Folie während der Behandlung durch Ändern der Drehrichtung der Spulen wechselt.

2. Verfahren nach Anspruch 1, **dadurch gekennzeichnet, daß** man die Flüssigkeit der Wanne nach der ersten Behandlung wechselt.

3. Verfahren nach Anspruch 1 oder 2, **dadurch gekennzeichnet, daß** an der Folie nach der ersten Behandlung Flüssigkeit haftet.

4. Verfahren nach Anspruch 3, **dadurch gekennzeichnet, daß** mindestens 1g/m² Flüssigkeit an der Folie haften.

5. Verfahren nach einem oder mehreren der vorhergehenden Ansprüche, **dadurch gekennzeichnet, daß** die Flüssigkeit Wasser umfaßt.

6. Verfahren nach einem oder mehreren der vorhergehenden Ansprüche, **dadurch gekennzeichnet, daß** die Flüssigkeit Säure, vinylhaltige und/oder vinylphosphonsäurehaltige Monomere umfaßt.

7. Verfahren nach Anspruch 6, **dadurch gekennzeichnet, daß** die Säure Phosphorsäure ist und das vinylhaltige Monomer Vinylsulfonsäure und das vinylphosphonsäurehaltige Monomer Vinylphosphonsäure ist.

8. Verfahren nach einem oder mehreren der vorhergehenden Ansprüche, **dadurch gekennzeichnet, daß** die Folie mindestens 10mal durch das Flüssigkeitsbad geführt wird.

9. Verfahren nach einem oder mehreren der vorhergehenden Ansprüche, **dadurch gekennzeichnet, daß** die Folie mit einer Geschwindigkeit von 0,5 bis 100 m/min durch das Flüssigkeitsbad geführt wird.

10. Verfahren nach einem oder mehreren der vorhergehenden Ansprüche, **dadurch gekennzeichnet, daß** die Folie mit einer Rückzugskraft bezogen auf die Breite der Folie im Bereich von 0,5 bis 200 N/m geführt wird.

11. Verfahren nach einem oder mehreren der vorhergehenden Ansprüche, **dadurch gekennzeichnet, daß** die Folie 15 Minuten bis 3 Stunden behandelt wird..

12. Verfahren nach einem oder mehreren der vorhergehenden Ansprüche, **dadurch gekennzeichnet, daß** man einen Jiggers zur Behandlung von Polyazolfolien verwendet.

## Claims

1. A process for the treatment of polyazole films, **characterized in that** a film is passed at least twice through a trough filled with a liquid, with the film being unrolled from a spool and rolled up on a further spool and the direction of travel of the film is changed during the treatment by altering the direction of rotation of the spools.

2. The process as claimed in claim 1, **characterized in that** the liquid in the trough is changed after the first treatment.

3. The process as claimed in claim 1 or 2, **characterized in that** liquid adheres to the film after the first treatment.

4. The process as claimed in claim 3, **characterized in that** at least 1 g/m² of liquid adheres to the film.

5. The process as claimed in one or more of the preceding claims, **characterized in that** the liquid comprises water.

6. The process as claimed in one or more of the preceding claims, **characterized in that** the liquid comprises acid, vinyl-containing monomers and/or monomers containing vinylphosphonic acid groups.

7. The process as claimed in claim 6, **characterized in that** the acid is phosphoric acid and the vinyl-containing monomer is vinylsulfonic acid and the monomer containing vinylphosphonic acid groups is vinylphosphonic acid.

8. The process as claimed in one or more of the preceding claims, **characterized in that** the film is passed through the bath of liquid at least 10 times.

9. The process as claimed in one or more of the preceding claims, **characterized in that** the film is passed through the bath of liquid at a speed of from 0.5 to 100 m/min.

10. The process as claimed in one or more of the preceding claims, **characterized in that** the film is conveyed with a drawback force per unit width of the film in the range from 0.5 to 200 N/m.

11. The process as claimed in one or more of the preceding claims, **characterized in that** the film is treated for from 15 minutes to 3 hours.

12. The process as claimed in one or more of the preceding claims, **characterized in that** a jigger is used for the treatment of polyazole films.

## Revendications

1. Procédé pour le traitement de feuilles de polyazole, **caractérisé en ce que** l'on fait passer une feuille au moins deux fois dans une cuve remplie de liquide, sachant que l'on déroule la feuille à partir d'une bobine et on l'enroule sur une autre bobine et le sens machine de la feuille durant le traitement est modifié par le changement de sens de rotation des bobines.

2. Procédé selon revendication 1, **caractérisé en ce que** l'on change le liquide de la cuve après le premier traitement.

3. Procédé selon revendication 1 ou 2, **caractérisé en ce que** du liquide adhère à la feuille après le premier traitement.

4. Procédé selon revendication 3, **caractérisé en ce qu'** au moins 1 g/m² de liquide adhère à la feuille.

5. Procédé selon une ou plusieurs revendications précédentes, **caractérisé en ce que** le liquide comprend de l'eau.

6. Procédé selon une ou plusieurs revendications précédentes, **caractérisé en ce que** le liquide comprend de l'acide, des monomères à teneur en vinyle et / ou à teneur en acide vinyl-phoshonique.

7. Procédé selon revendication 6, **caractérisé en ce que** l'acide est de l'acide phosphorique et le monomère à teneur en vinyle est de l'acide vinyl-sulfonique et le monomère à teneur en acide vinyl-phosphonique est de l'acide vinyl-phosphonique.

8. Procédé selon une ou plusieurs revendications précédentes, **caractérisé en ce que** la feuille est passée au moins 10 fois à travers le bain de liquide.

9. Procédé selon une ou plusieurs revendications précédentes, **caractérisé en ce que** la feuille est passée à travers le bain de liquide avec une vitesse de 0,5 à 100 m/min.

10. Procédé selon une ou plusieurs revendications précédentes, **caractérisé en ce que** la feuille est passée avec une force de rappel comprise entre 0,5 et 200 N/m par rapport à la largeur de la feuille.

11. Procédé selon une ou plusieurs revendications précédentes, **caractérisé en ce que** la feuille est traitée entre 15 minutes et 3 heures.

12. Procédé selon une ou plusieurs revendications précédentes, **caractérisé en ce que** l'on utilise un jigger pour le traitement de feuilles polyazole.
